# EUROPEAN PATENT APPLICATION

(11) **EP 3 550 121 A1**
(43) Date of publication of application: **09.10.2019**
(21) Application number: 17876677.0
(22) Date of filing: 01.12.2017
(51) Int. Cl.: F02B 77/00, F01N 3/28, F02B 61/02, F02B 77/08, F04B 53/00

(54) **ENGINE**

(30) Priority: 02.12.2016 JP 2016235265
(71) Applicant: Yanmar Co., Ltd., Osaka-shi, Osaka 530-8311 (JP)
(72) Inventor: AKEI Masahiro, Osaka-shi Osaka 530-8311 (JP)
(74) Representative: Kuhnen & Wacker Patent- und Rechtsanwaltsbüro PartG mbB
(86) International application number: PCT/JP2017/043352
(87) International publication number: WO 2018/101472

(57) **Abstract**

Vibration damping performance of accessories of an engine is enhanced. An engine according to a first aspect of the present invention includes a plurality of accessories that vibrate in a direction parallel to a crankshaft of the engine, the plurality of accessories being provided such that a phase of a resonance point in a frequency response function is shifted. An engine according to a second aspect of the present invention includes: a first accessory disposed along a direction orthogonal to a crankshaft of the engine; and a second accessory provided in a flywheel housing of the engine, natural frequency of the first accessory and natural frequency of the second accessory being made close to each other by causing support rigidity of the first accessory and support rigidity of the second accessory to be close in value to each other.

## Description

### Technical Field

The present invention relates to techniques for enhancing vibration damping performance of accessories of an engine.

### Background Art

In a structure that has been widely in practical use to date, an engine is provided with an exhaust gas purifier including a DPF and an oxidation catalyst as a unit for post-processing exhaust gas to collect particulate matters contained in the exhaust gas. For example, Patent Literature 1 (hereinafter, PTL 1) and Patent Literature 2 (hereinafter, PTL 2) each disclose a structure in which an exhaust gas purifier is disposed in a direction orthogonal to a crankshaft of an engine.

PTL 2 describes techniques for enhancing vibration damping performance of the exhaust gas purifier by setting a spring constant of a spring element in a mount mechanism for attaching the exhaust gas purifier so that, among natural frequencies of the entire mount mechanism to the engine, natural frequencies in the crankshaft direction and the longitudinal direction of the exhaust gas purifier are outside an excitation frequency range of the engine.

### Citation List

### Patent Literature

PTL1: Japanese Patent No. 5567281
PTL2: Japanese Patent No. 5370080

### Summary of Invention

### Technical Problem

As in the techniques according to PTL2, in conventionally used techniques, vibration damping performance of an engine is enhanced by suppressing resonance between an exhaust gas purifier, which is an accessory of the engine, and the engine. However, as accessories that can cause resonance with the engine, not only the exhaust gas purifier but other components that are large in mass and can be greatly affected by vibration of the engine, such as a hydraulic pump, a turbocharger, and the like, also need to be taken into account. That is, it is necessary to reduce vibration of the entire engine while taking coupled vibration of the engine accessories into account.

Resonance between a plurality of accessories attached to an engine has not been taken into account in any of conventional techniques. Thus, there remains a possibility for improvement in terms of enhancing vibration damping performance of engine accessories.

### Solution to Problem

An engine according to a first aspect of the present invention includes a plurality of accessories that vibrate in a direction parallel to a crankshaft of the engine, the plurality of accessories being provided such that a phase of a resonance point in a frequency response function is shifted.

An engine according to a second aspect of the present invention includes: a first accessory disposed along a direction orthogonal to a crankshaft of the engine; and a second accessory provided in a flywheel housing of the engine, natural frequency of the first accessory and natural frequency of the second accessory being made close to each other by causing support rigidity of the first accessory and support rigidity of the second accessory to be close in value to each other.

The first accessory is an exhaust gas purifier whose longitudinal direction is a direction orthogonal to the crankshaft of the engine and the second accessory is a hydraulic pump that is coupled to the crankshaft of the engine to be driven, and the hydraulic pump is supported in a cantilever manner with respect to the flywheel housing and provided with a reinforcing member for reinforcing a support structure of the hydraulic pump, so that support rigidity brought by the support structure is made close to support rigidity of the exhaust gas purifier.

### Advantageous Effects of Invention

The present invention can enhance vibration damping performance of accessories of an engine.

### Brief Description of Drawings

[FIG. 1] A diagram illustrating accessories attached to an engine.
[FIG. 2] A diagram obtained by replacing vibration of the engine with a dynamical model.
[FIG. 3] A graph indicating frequency response functions.
[FIG. 4] A graph indicating frequency response functions according to a conventional structure.
[FIG. 5] A graph indicating vibration modes of an exhaust gas purifier and a hydraulic pump.
[FIG. 6] A diagram illustrating an embodiment of a reinforcing member.
[FIG. 7] A diagram illustrating an embodiment of a reinforcing member.
[FIG. 8] A diagram illustrating an embodiment of a reinforcing member.
[FIG. 9] A diagram illustrating an embodiment of a reinforcing member.
[FIG. 10] A diagram illustrating an embodiment of a reinforcing member.
[FIG. 11] A diagram illustrating an embodiment of a reinforcing member.

### Description of Embodiments

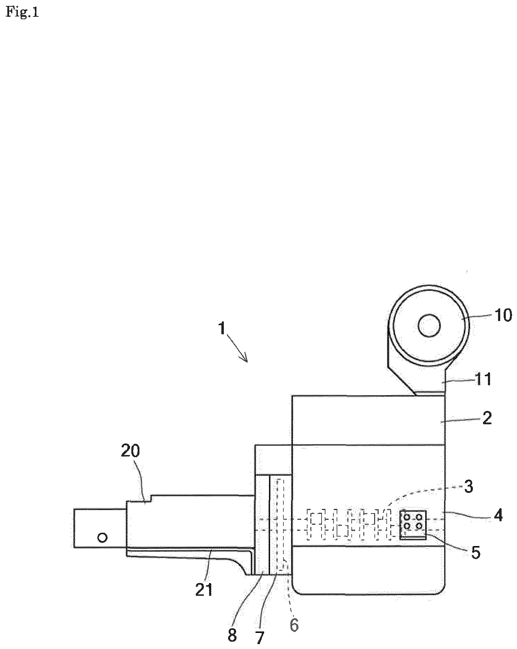

A schematic structure of an engine 1 is described with reference to FIG. 1. The engine 1 includes a cylinder head 2 and a cylinder block 4 in which a crankshaft 3 is installed. The engine 1 is provided with an engine mount 5 for placement. The engine mount 5 is placed with interposition of vibration damping rubber to support the engine 1 while damping vibration.

An exhaust gas purifier 10 is fixed over the cylinder head 2 with a mount 11 interposed therebetween. The exhaust gas purifier 10 is disposed such that its longitudinal direction is orthogonal to the crankshaft 3.

The cylinder block 4 is provided with a flywheel housing 7 in which a flywheel 6 connected to the crankshaft 3 is installed. A cover 8 that covers an open surface of the flywheel housing 7 is attached outside the flywheel housing 7.

A hydraulic pump 20 is fixed outside the cover 8 of the flywheel housing 7. The hydraulic pump 20 is supported in a cantilever manner with respect to the flywheel housing 7. Further, a reinforcing member 21 is provided on the flywheel housing 7 so as to extend therefrom along a direction in which the hydraulic pump 20 extends. The reinforcing member 21 supports a lower portion of the hydraulic pump 20 and reinforces the support structure of the hydraulic pump 20. Thus, in the present embodiment, support rigidity is increased by the reinforcing member 21 reinforcing the support structure of the hydraulic pump 20 supported in a cantilever manner with respect to the flywheel housing 7.

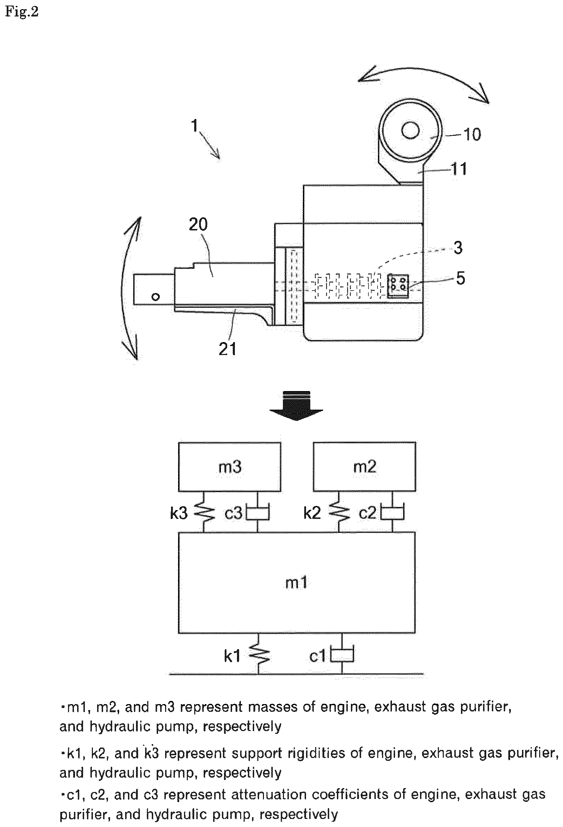

As described above, the engine 1 is provided with the exhaust gas purifier 10 and the hydraulic pump 20 as accessories. With operation of the engine 1, these accessories vibrate in a direction parallel to the axial direction of the crankshaft 3 (a direction parallel to a plane including the axial direction of the crankshaft 3) (see FIG. 2).

Referring next to FIG. 2, the vibration of the exhaust gas purifier 10 and the hydraulic pump 20 caused by driving the engine 1 is described.

As illustrated in FIG. 2, a dynamical model is assumed, where the engine 1 is replaced by a main vibration system while the exhaust gas purifier 10 and the hydraulic pump 20 as accessories are replaced by auxiliary vibration systems. In FIG. 2, m1 represents the mass of the engine 1, k1 represents the support rigidity (spring constant) of the engine 1, and c1 represents the attenuation coefficient of the engine 1. Similarly, m2 and m3 represent the respective masses of the exhaust gas purifier 10 and the hydraulic pump 20, k2 and k3 represent the respective support rigidities of the exhaust gas purifier 10 and the hydraulic pump 20, and c2 and c3 represent the respective attenuation coefficients of the exhaust gas purifier 10 and the hydraulic pump 20. The support rigidities and attenuation coefficients are constants that depend on corresponding attachment rigidities.

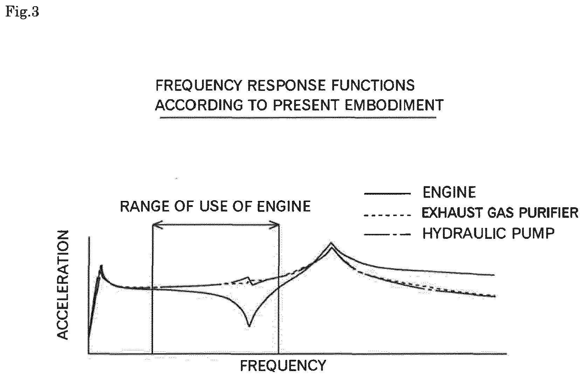

FIG. 3 indicates results of determining frequency response functions by using the constants defined as described above. FIG. 3 is a graph where the horizontal axis shows frequency and the vertical axis shows acceleration. FIG. 3 demonstrates that the vibration amplitude at a resonance point of the engine 1, the exhaust gas purifier 10, and the hydraulic pump 20 is suppressed in a range of use of the engine 1. This occurs because the support rigidity k3 of the hydraulic pump 20 is controlled with the reinforcing member 21 provided in the support structure of the hydraulic pump 20 while preventing coupled vibration of the exhaust gas purifier 10 and the hydraulic pump 20, and accordingly, vibration response in the rotation range of use of the engine 1 is decreased. That is, by making natural frequencies in vibration modes of the exhaust gas purifier 10 and the hydraulic pump 20 close to each other, resonance between the exhaust gas purifier 10 and the hydraulic pump 20 is suppressed.

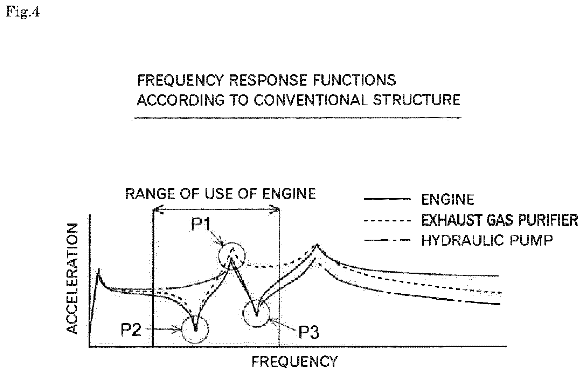

FIG. 4 indicates frequency response functions obtained in a case where the reinforcing member 21 is removed from the support structure of the hydraulic pump 20 (that is, a case of a conventional structure where the support rigidity of the hydraulic pump 20 is not controlled). FIG. 4 is a graph where the horizontal axis shows frequency and the vertical axis shows acceleration.

FIG. 4 shows that a resonance point and antiresonance points are included in a range of use of the engine 1. In particular, it is demonstrated that, at the resonance point represented by P1, resonance between the exhaust gas purifier 10 and the hydraulic pump 20 caused by the vibration of the engine 1 results in increased vibration. P2 and P3 represent the antiresonance points. Thus, if the natural frequency of the exhaust gas purifier 10 and the natural frequency of the hydraulic pump 20 agree (produce resonance) with the engine vibromotive force frequency in the rotation range of use of the engine 1, coupled vibration will occur. Consequently, the mount 11 of the exhaust gas purifier 10 and the support structure of the hydraulic pump 20 may become damaged.

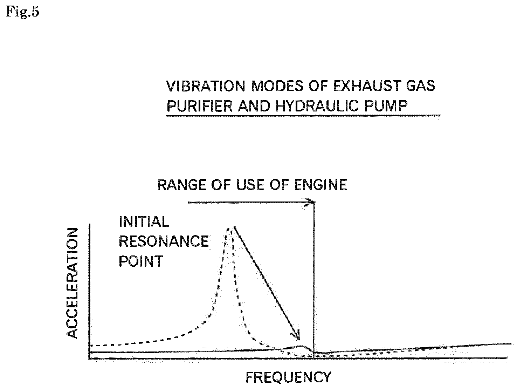

In contrast, in the present embodiment, the reinforcing member 21 is added to the support structure of the hydraulic pump 20, so that the support rigidity of the hydraulic pump 20 and the support rigidity of the exhaust gas purifier 10 can be caused to be close in value to each other. Accordingly, the natural frequency of the hydraulic pump 20 is made close to the natural frequency of the exhaust gas purifier 10. By making the natural frequencies of the exhaust gas purifier 10 and the hydraulic pump 20 close to each other as described above, the effect of a dynamic vibration absorber can be exerted and, as a result, vibration can be suppressed (see FIG. 5). Thus, suppressing coupled vibration of the exhaust gas purifier 10 and the hydraulic pump 20 makes it possible to suppress vibration caused with operation of the engine 1. In addition, the vibration damping performance of the entire engine 1 can be enhanced. Moreover, it is unnecessary to increase the support rigidity on the exhaust gas purifier 10. It is therefore unnecessary to reinforce the mount 11 of the exhaust gas purifier 10.

As illustrated in FIG. 5, the reinforcing member 21 attached to the hydraulic pump 20 serves to control the support rigidity of the hydraulic pump 20 so that the value of the point of initial resonance of the hydraulic pump 20 with the exhaust gas purifier 10 is set close to the maximum value in the range of use of the engine 1, resonance between the exhaust gas purifier 10 and the hydraulic pump 20 that occurs when the engine 1 is used can be suppressed. In other words, because of the contribution by the reinforcing member 21 to the support rigidity of the hydraulic pump 20, a point of resonance between the exhaust gas purifier 10 and the hydraulic pump 20 is phase-shifted, so that resonance between these two accessories can be suppressed effectively.

As described above, in the present embodiment, in the engine 1 including the exhaust gas purifier 10 and the hydraulic pump 20 that vibrate in a direction parallel to the crankshaft 3, these accessories are provided such that the phases of a resonance point and an antiresonance point in frequency response functions are shifted. Specifically, by making the support rigidity of the hydraulic pump 20 close to the support rigidity of the exhaust gas purifier 10, a phase that can cause resonance between the exhaust gas purifier 10 and the hydraulic pump 20 is shifted so that resonance between the exhaust gas purifier 10 and the hydraulic pump 20 is suppressed. These two accessories absorb mutual vibrations. Accordingly, their resonance and antiresonance with the engine 1 can be suppressed.

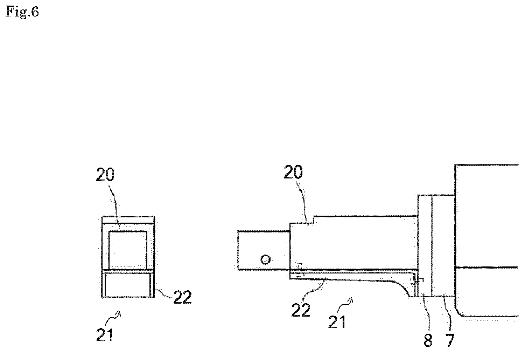

Referring next to FIGs. 6 to 11, preferred embodiments of the reinforcing member are described.

In the embodiment illustrated in FIG. 6, the reinforcing member 21 has a shape that bends from a surface of the cover 8 of the flywheel housing 7 along the lower surface of the hydraulic pump 20 and supports the hydraulic pump 20 from the lower side. The reinforcing member 21 includes ribs 22 along a direction orthogonal to the bending surface. Thus, the reinforcing member 21 reinforces the support structure of the hydraulic pump 20 by supporting the hydraulic pump 20 from the lower side, which is supported in a cantilever manner with respect to the flywheel housing 7.

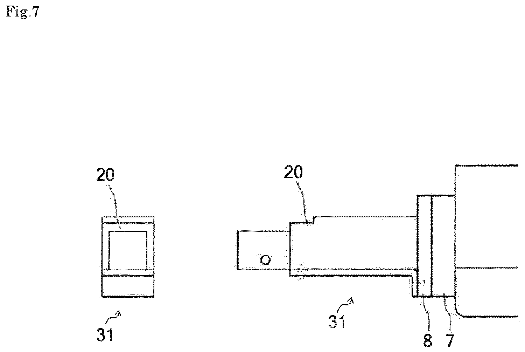

In the embodiment illustrated in FIG. 7, a reinforcing member 31 is formed as a flat plate member having a shape that bends from the surface of the cover 8 of the flywheel housing 7 along the lower surface of the oil hydraulic member 20. The reinforcing member 31 is formed using a plate material thicker than the material of the reinforcing member 21 and, accordingly, has a simple structure that requires no ribs 22. That is, with a simple structure obtained by bending a flat plate, the reinforcing member 31 attains a reinforcement effect equivalent to that by the reinforcing member 21 including the ribs 22. Similarly, the reinforcing member 31 also reinforces the support structure of the hydraulic pump 20 by supporting the hydraulic pump 20 from the lower side, which is supported in a cantilever manner with respect to the flywheel housing 7.

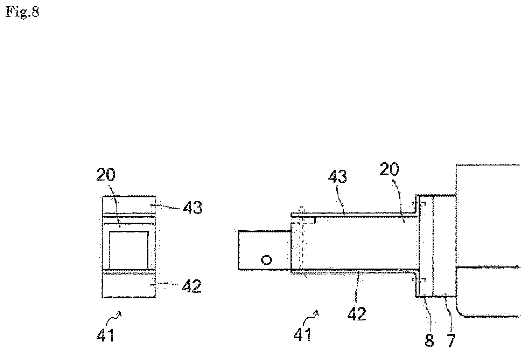

In the embodiment illustrated in FIG. 8, a reinforcing member 41 includes a lower stay 42 and an upper stay 43. The lower stay 42 supports the hydraulic pump 20 from the lower side. The upper stay 43 is provided over the hydraulic pump 20 and sandwiches the hydraulic pump 20 in cooperation with the lower stay 42. That is, the reinforcing member 41 supports the hydraulic pump 20 such that the hydraulic pump 20 is sandwiched from the upper and lower sides. Thus, the reinforcing member 41 supports the hydraulic pump 20 from the lower side while also supporting the hydraulic pump 20 from the upper side. Accordingly, the support rigidity can be further increased. For example, if the engine 1 is larger in size and the hydraulic pump 20 is also larger in size, such a form sandwiched from the upper and lower sides as that of the reinforcing member 41 is suitable.

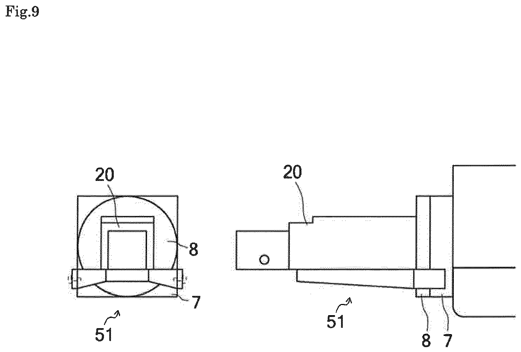

In the embodiment illustrated in FIG. 9, a reinforcing member 51 is a bracket that extends from a side surface of the flywheel housing 7 to the lower surface of the hydraulic pump 20. Thus, the support rigidity can be further increased through direct support from the flywheel housing 7 with interposition of the reinforcing member 51.

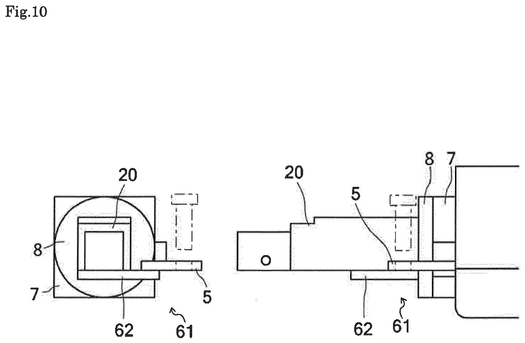

In the embodiment illustrated in FIG. 10, a reinforcing member 61 includes a stay 62 that extends to the lower surface of the hydraulic pump 20 from part of the engine mount 5 for holding the engine 1. That is, the stay 62 extends from an engine leg for supporting the engine 1 while damping vibration and supports the hydraulic pump 20 from the lower side. The stay 62 may be formed so as to be integral with the engine mount 5 or may be attached to part of the engine mount 5.

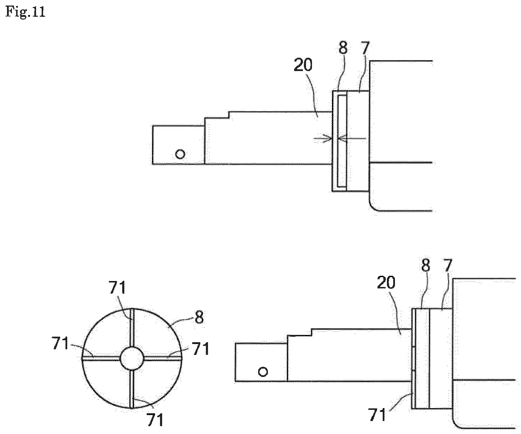

In the embodiment illustrated in FIG. 11, the support rigidity of the support structure is increased not by employing a reinforcing member that supports the hydraulic pump 20 from the lower side as described above but by reinforcing the cover 8 of the flywheel housing 7 that supports the hydraulic pump 20 in a cantilever manner and increasing the rigidity of the cover 8 itself. Examples of this include a structure in which the support rigidity is enhanced by increasing the thickness of the cover 8 and thereby increasing the rigidity of the cover 8 and a structure in which the support rigidity of the cover 8 is enhanced by employing ribs 71 provided radially on a surface of the cover 8.

The embodiments relating to the above-described reinforcing members may each be optimized so as to achieve desired support rigidity of the hydraulic pump 20.

### Industrial Applicability

The present invention can be utilized as techniques for enhancing vibration damping performance of accessories of an engine.

### Reference Signs List

- 1: engine
- 3: crankshaft
- 7: flywheel housing
- 8: cover
- 10: exhaust gas purifier
- 11: mount
- 20: hydraulic pump
- 21: reinforcing member

## Claims

1. An engine comprising
a plurality of accessories that vibrate in a direction parallel to a crankshaft of the engine,
the plurality of accessories being provided such that a phase of a resonance point in a frequency response function is shifted.

2. An engine comprising:
a first accessory disposed along a direction orthogonal to a crankshaft of the engine; and
a second accessory provided in a flywheel housing of the engine,
natural frequency of the first accessory and natural frequency of the second accessory being made close to each other by causing support rigidity of the first accessory and support rigidity of the second accessory to be close in value to each other.

3. The engine according to claim 2, wherein
the first accessory is an exhaust gas purifier whose longitudinal direction is a direction orthogonal to the crankshaft of the engine and the second accessory is a hydraulic pump that is coupled to the flywheel housing to be driven, and
the hydraulic pump is supported in a cantilever manner with respect to the flywheel housing and provided with a reinforcing member for reinforcing a support structure of the hydraulic pump, so that support rigidity brought by the support structure is made close to support rigidity of the exhaust gas purifier.
